# EUROPÄISCHE PATENTSCHRIFT

(11) **EP 0 565 829 B1**
(45) Veröffentlichungstag und Bekanntmachung des Hinweises auf die Patenterteilung: **09.07.1997**
(21) Anmeldenummer: 93102436.8
(22) Anmeldetag: 17.02.1993
(51) Int. Cl.: A01J 25/15

(54) **Verfahren zur Herstellung eines Käselaibs und Vorrichtung zur Durchführung des Verfahrens**
Method of producing a block of cheese and apparatus using this method
Procédé de fabrication d'un bloc de fromage et appareil pour la mise en oeuvre de ce procédé

(30) Priorität: 16.04.1992 CH 1268/92
(43) Veröffentlichungstag der Anmeldung: 20.10.1993
(73) Patentinhaber: APV (SCHWEIZ) AG, 3076 Worb (CH)
(72) Erfinder: Fahrni, Walter, CH-3123 Belp (CH)
(74) Vertreter: Keller, René, Dr.

(56) Entgegenhaltungen:
- CH-A- 439 855
- CH-A- 670 929
- DE-A- 3 134 607
- DE-A- 4 100 996
- FR-A- 1 427 966

## Beschreibung

### Technisches Gebiet

Die Erfindung betrifft ein Verfahren zur Herstellung eines Käselaibs aus einem Sirten-Käse-Bruchgemisch (Sirte = Fettmolke), bei welchem das Sirten-Käse-Bruchgemisch in einer mit einem Siebwickel ausgekleideten Pressform zwischen Pressplatte und Gegenplatte gepresst wird. Ferner betrifft die Erfindung eine Vorrichtung zur Durchführung des Verfahrens mit einer Pressplatte und einer Gegenplatte, wobei die Pressplatte in einer mit einem Siebwickel ausgekleideten Pressform durch eine Antriebseinrichtung vorschiebbar ist.

### Stand der Technik

Die bekannten Vorrichtungen zum Abpressen des Sirten-Käse-Bruchgemisches bestehen aus einem hohlzylindrischen Behälter mit Press- und Gegenplatte, deren pressende Oberflächen mit Abflussrillen versehen und mit Siebrondellen belegt sind. Die Gegenplatte ist ortsfest am Behälter gehalten, die Pressplatte wird mit einer Antriebseinrichtung vorgeschoben. An der mit Noppen versehenen zylindrischen Behälterinnenwand ist ein zylindrisches Sieb ortsfest gehalten. Während des Abpressens wird der Bruch elastisch und plastisch verformt und die zwischen den Bruchstücken befindliche Sirte ausgetrieben.

Durch das Abpressen von nur einer Seite her wird, bedingt durch innere Reibung im Bruchgemisch und durch die Haftung des Bruchgemisches am zylindrischen Sieb, der der Pressplatte benachbarte Teil des Bruchgemisches stärker entwässert als der an der Gegenplatte anliegende.

Zur Vermeidung dieser unterschiedlichen Entwässerung wurde vorgeschlagen, mit zwei gleichzeitig gegeneinander vorgeschobenen Pressplatten zu arbeiten. Dieses Verfahren ergibt zwar eine bedeutend gleichmässigere Entwässerung, ist aber konstruktiv aufwendig und teuer. Nachteilig ist ferner, dass die Antriebseinrichtung der einen Pressplatte zum Einfüllen des Sirten-Käse-Bruchgemischs resp. zum Ausformen des gepressten Käses entfernt werden muss und dass ein erhöhter Platzbedarf beim Wenden der gesamten Pressvorrichtung besteht.

Um diesen Problemen abzuhelfen, wurde in der Patentschrift CH 670 929 eine Pressvorrichtung vorgeschlagen, bei welcher das Sieb in Pressrichtung beweglich ist, wobei es während eines Teils des Presshubs der Pressplatte mit dieser mitbewegt wird. Zu diesem Zweck sind an der Pressplatte Mitnehmer vorgesehen, so dass das Sieb erst dann mit der Pressplatte mitbewegt wird, wenn letztere etwa die Hälfte des Presshubs ausgeführt hat.

Aus der DE-41 00 996 A1 ist eine Käsepresse bekannt, bei welcher eine Pressplatte mit einem Hydraulikzylinder von unten gegen eine Gegenplatte (13) gepresst wird. Die Siebform (4) kann von einem Support losgelöst werden und sich beim Pressen frei bewegen.

Es hat sich nun gezeigt, dass die in der CH 670 929 beschriebenen Massnahmen die Inhomogenitäten noch nicht im erhofften Mass zu beseitigen vermögen.

### Darstellung der Erfindung

Aufgabe der Erfindung ist es daher, ein Verfahren der eingangs genannten Art anzugeben, mit welchem sich eine bessere Homogenität des Käses erzielen lässt. Ferner ist es Aufgabe der Erfindung, eine Vorrichtung der eingangs genannten Art anzugeben, mit welcher aus dem Sirten-Käse-Bruchgemisch nach unterschiedlichen, wählbaren Methoden Käselaibe guter Qualität hergestellt werden können.

Das erfindungsgemässe Verfahren ist im Anspruch 1 definiert. Es zeichnet sich namentlich dadurch aus, dass zumindest zum Anpressen eine Presskraft von oben zur Wirkung gebracht wird, indem die Pressform zusammen mit der Pressplatte gleichzeitig und in gleichem Mass nach oben auf die Gegenplatte zu bewegt wird. Die eingefüllte Masse (Sirten-Käse-Bruchgemisch) wird also zunächst von oben flachgedrückt und angepresst, bevor massgebliche Presskräfte - sei es nun von oben oder von unten - zur Wirkung gebracht werden.

Vorzugsweise wird die Presskraft von oben dadurch zur Wirkung gebracht, dass die Pressform zusammen mit der Pressplatte nach oben auf die Gegenplatte zu bewegt wird. Pressform und Pressplatte bilden somit zusammen einen topfförmigen Behälter, der als Ganzes von unten an den ortsfesten "Behälterdeckel" (Gegenplatte) gepresst wird.

Eine Vorrichtung, die sich zur Durchführung des Verfahrens eignet, zeichnet sich dadurch aus, dass die Pressform mittels einer steuerbaren Antriebseinrichtung entsprechend einer vorgebbaren Relativbewegung bezüglich der Press- resp. Gegenplatte verschiebbar ist.

Um mit dieser Vorrichtung das erfindungsgemässe Verfahren durchzuführen, wird zunächst die separat steuerbare Pressform zusammen mit der Pressplatte nach oben geschoben. Danach kann der Pressvorgang je nach Bedarf variiert werden durch unabhängiges Bewegen von Pressform und Pressplatte. Mit der vorliegenden Pressvorrichtung können aber auch andere Pressmethoden angewendet werden. Der Käser ist also frei in der Wahl des Pressverfahrens. Im Rahmen der Erfindung hat er eine vielseitig einsetzbare Käsepresse zur Verfügung.

Vorzugsweise umfasst die steuerbare Antriebsvorrichtung einen separaten pneumatischen oder hydraulischen Hubzylinder. Die Pressform lässt sich dadurch mit technisch verhältnismässig einfachen Mitteln gezielt verschieben.

Gemäss einer besonders bevorzugten Ausführungsform ist der Hubzylinder zum Verschieben der Pressform in koaxialer Verschachtelung mit einem Hubzylinder zum Vorschieben der Pressplatte angeordnet. Dadurch ergibt sich eine kompakte Anordnung und die Gegenplatte lässt sich (wie bei den vorbekannten Systemen mit einseitiger Pressplatte) mit geringem Aufwand befestigen resp. entfernen.

Gemäss einer vorteilhaften Konstruktion sind die Hubzylinder so ineinander verschachtelt und mit der Pressform resp. der Pressplatte verbunden, dass beim Betätigen des die Pressform vortreibenden Hubzylinders gleichzeitig und in gleichem Mass die Pressplatte vorgetrieben wird und beim Betätigen des zweiten Hubzylinders die Pressplatte gegenüber der Pressform vorgetrieben wird. Zur Realisierung einer Presskraft von oben genügt es dann, den dazu bestimmten Hubzylinder allein zu betätigen. Eine zusätzliche Kraft von unten wird durch die Betätigung des zweiten Hubzylinders bewirkt.

Die Pressform ist typischerweise zylindrisch. Press- und Gegenplatte sind im wesentlichen rund, wobei die Gegenplatte Teil eines an einer Tragkonstruktion lösbar befestigten Deckels ist. Die Abmessungen sind vorzugsweise so gewählt, dass mit der Vorrichtung ein Käselaib in der für Käse bekannten runden Form gepresst werden kann.

Im Hinblick auf eine effiziente Käseherstellung empfiehlt es sich, für die Antriebsvorrichtung eine Steuerschaltung zur Steuerung der Hubzylinder vorzusehen, so dass wahlweise eine Presskraft von unten, eine Presskraft von oben und Kräfte von unten und oben auf die zu pressende Masse ausgeübt werden können. Die Art der Kraftausübung ist also vorprogrammiert. Der Käser braucht nur noch den zeitlichen Verlauf und die Grösse der Presskraft vorzugeben. Besonders vorteilhaft ist es natürlich, wenn der gesamte Pressvorgang (der sich z. B. über eine Zeit von 20 Std. erstrecken kann) in einer programmierbaren Schaltung abgespeichert ist, so dass er automatisch durchgeführt werden kann.

Mehrere erfindungsgemässe Pressvorrichtungen können auf einer gemeinsamen Tragkonstruktion angebracht werden, welche um eine horizontale Achse drehbar gelagert ist zum Wenden der Käse während des Pressens.

Vorzugsweise sind die Gegenplatten der Pressvorrichtungen mit je einem an der Tragkonstruktion befestigbaren Gegenkreuz abstützbar.

Aus der nachfolgenden Beschreibung und der Gesamtheit der Patentansprüche ergeben sich weitere vorteilhafte Ausführungsformen der Erfindung.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1: Eine schematische Darstellung der erfindungsgemässen Käsepresse im Schnitt;
- Fig. 2 a-d: eine Darstellung der im Grundsatz vier Pressstellungen, die die Vorrichtung ausführen kann.

Grundsätzlich sind in allen Zeichnungen gleiche Teile mit gleichen Bezugszeichen versehen.

### Wege zur Ausführung der Erfindung

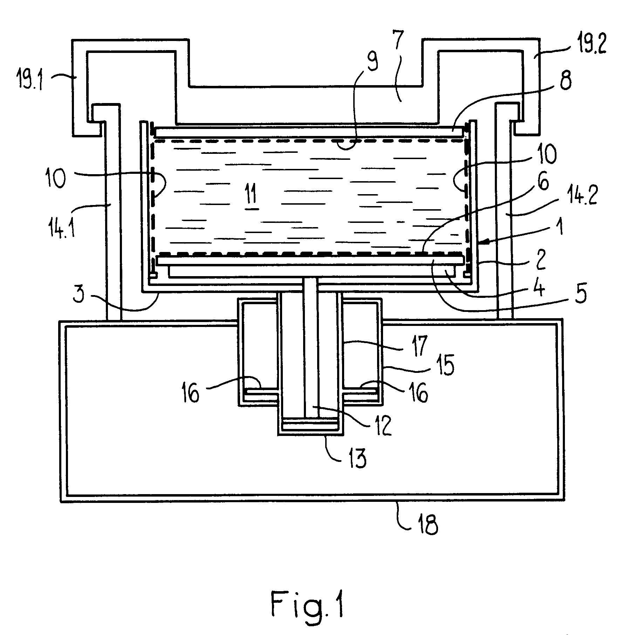

Die in Fig. 1 dargestellte Vorrichtung dient zum Abpressen der Sirte aus einem Sirten-Käse-Bruchgemisch z. B. zur Herstellung von Hartkäse (Emmentaler, Greyerzer, Sbrinz etc.).

In einer hohlzylindrischen, topfförmigen Pressform 1 (mit einem Boden 3 und einer Wand 2) ist ein Pressstern 4 angeordnet, der eine kreisscheibenförmige Pressplatte 5 trägt. Auf der im wesentlichen den ganzen Querschnitt der hohlzylindrischen Pressform ausfüllenden Pressplatte 5 liegt herausnehmbar eine Siebrondelle 6. Die Pressplatte 5 besitzt auf der oberen, der Oeffnung der Pressform zugewandten Oberfläche einen rillenförmigen Kanalraster mit z. B. 3 mm tiefen Kanälen, sowie am Rand einige weitere zur Achse der Platte resp. des Behälters parallele Kanäle, die in die Kanäle der Oberfläche münden.

Ein ortsfest angeordnetes Gegenkreuz 7 stützt eine Gegenplatte 8 in axialer Richtung (der Pressform 1) ab. Das Gegenkreuz 7 weist (vier) Befestigungsarme - wovon zwei, 19.1, 19.2, in der Fig. 1 gezeigt sind - auf. Sie können an (vier) entsprechenden Verankerungsstützen - wovon in der Fig. 1 zwei, 14.1, 14.2, gezeigt sind - lösbar befestigt werden. Die Verankerungsstützen 14.1, 14.2 ihrerseits sind an einer Tragkonstruktion 18 fixiert. Die Befestigungsarme 19.1, 19.2 sind so geformt, dass die axiale Bewegung der Pressform 1 nicht behindert wird.

Auf die Gegenplatte 8 folgt eine Siebrondelle 9. Die Gegenplatte 8 ist in ähnlicher Weise wie die Pressplatte 5 ausgebildet. Die Siebrondellen 6 und 9 sind im Prinzip identisch.

Beide erstrecken sich im wesentlichen über den gesamten Innenquerschnitt der Pressform 1.

An der Innenseite der zylindrischen Wand 2 der Pressform 1 ist ein Siebwickel 10 angeordnet. Er ist lose eingelegt und steht z. B. auf dem Boden 3 der Pressform 1 oder auf speziellen, an der Wand 2 befestigten Halterungen. Er kann sich während des Pressvorgangs verschieben. Durch die beiden kreisscheibenförmigen Siebrondellen 6 und 9 und den zylindrischen Siebwickel 10 wird ein Innenraum begrenzt, in dem ein Sirten-Käse-Bruchgemisch 11 zu einem Käselaib von runder Form gepresst werden kann.

Gemäss der Erfindung können nun sowohl die Pressplatte 5 als auch die Pressform 1 in axialer Richtung eigenständig vorbewegt werden. Gemäss einer besonders bevorzugten Ausführungsform der Erfindung sind zwei pneumatische Hubeinrichtungen vorgesehen. Die erste dieser Einrichtungen umfasst einen Hubzylinder 13, in dem vortreibbar ein Hubkolben 12 gelagert ist. Der Hubkolben 12 ist starr mit dem Pressstern 4 verbunden. Der Hubzylinder 13 ist in die Pressform 1 eingebaut und mit letzterer starr verbunden.

Der Hubzylinder 13 ist seinerseits in axialer Richtung vortreibbar. Er ist zu diesem Zweck verschiebbar in einem zweiten Hubzylinder 15 gelagert. Die beiden Hubzylinder 13 und 15 sind gemäss einer bevorzugten Ausführungsform koaxial verschachtelt angeordnet. An der zylindrischen Aussenwand 17 des Hubzylinders 13 ist ein umlaufender Ringflansch 16 angebracht. Der Hubzylinder 13 mit dem Ringflansch 16 bildet somit gleichsam den Hubkolben des ihn umgebenden Hubzylinders 15.

Der Hubzylinder 15 ist in eine Tragkonstruktion 18 eingebaut und mit ihr starr verbunden. Wird also der äussere Hubzylinder 15 unter Druck gesetzt, dann werden die Pressform 1 und der Hubzylinder 13 samt Pressstern 4 und Pressplatte 5 vorgetrieben.

Zwischen der Pressplatte 5 und der Innenseite der zylindrischen Wand 2 der Pressform 1 besteht ein Ringspalt, der gerade so gross ist, dass der Siebwickel 10 hindurchgeschoben werden kann. Dasselbe gilt für die Gegenplatte 8. Pressstern 4 und Presskreuz 7 sind vorzugsweise gegenüber der Pressplatte 5 resp. der Gegenplatte 8 radial zurückversetzt.

Die Innenseite der Wand 2 der Pressform 1 ist mit vorzugsweise in Achsenlängsrichtung verlaufenden Kanälen resp. Rillen versehen zum Ableiten von ausgepresster Flüssigkeit.

Die oben beschriebene Pressvorrichtung ist gemäss einer bevorzugten Ausführungsform auf der balkenförmigen Tragkonstruktion 18 befestigt (Längsachse der Tragkonstruktion steht senkrecht zur Zeichenebene). Die ineinander verschachtelten Zylinder sind im vorliegenden Beispiel in der Tragkonstruktion 18 versenkt. Die Tragkonstruktion 18 kann damit z. B. auch die Schläuche für die Pressluftzuführung aufnehmen.

Um den Käse während des Pressens wenden zu können, ist die Tragkonstruktion 18 um eine horizontale (in Fig. 1 senkrecht zur Zeichenebene stehende) Achse drehbar gelagert. Vorzugsweise werden auf derselben Tragkonstruktion 18 mehrere Pressvorrichtungen angebracht.

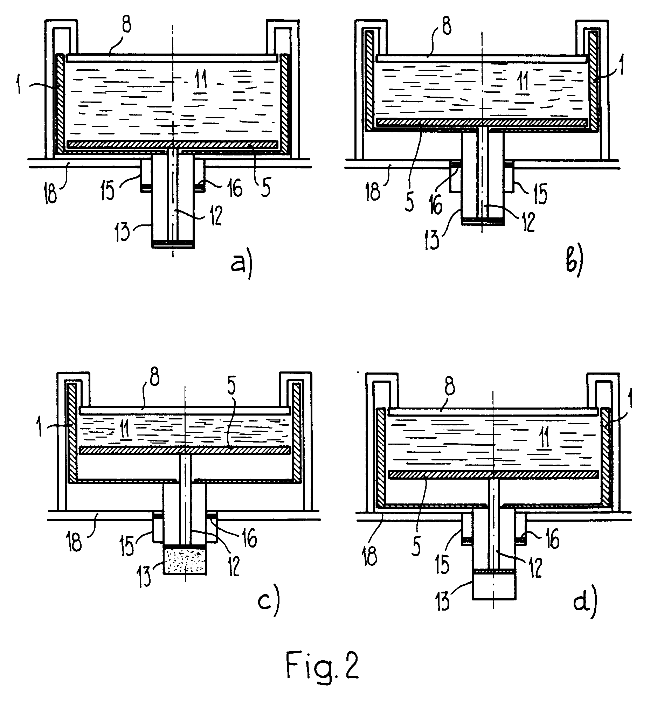

Anhand der Fig. 2 a-d soll nun die Funktionsweise der Pressvorrichtung erläutert werden. Um der Klarheit willen sind nur die wichtigsten der in Fig. 1 gezeigten Teile der Pressvorrichtung gezeigt und mit entsprechenden Bezugszeichen gekennzeichnet.

Fig. 2a zeigt die Vorrichtung im entlasteten Zustand. Die Pressform 1 befindet sich in unmittelbarer Nähe der Tragkonstruktion 18. Die Pressplatte 5 ihrerseits ist im wesentlichen unmittelbar über dem Boden 3 der Pressform 1 angeordnet (wobei hier der Einfachheit halber der Pressstern ausser Acht gelassen wird). Sowohl der äussere als auch der innere Hubzylinder 15 resp. 13 sind entlastet.

In Fig. 2b ist die Arbeitsstellung "Presskraft von oben" charakterisiert. Der äussere Hubzylinder 15 ist mit Druck beaufschlagt, so dass die Pressform 1 gegen die Gegenplatte 8 vorgeschoben ist. Das obere Ende des Siebwickels 10 und das der Pressform 1 sind in dieser Arbeitsstellung an der Gegenplatte 8 vorbeigeschoben. Der innere Hubzylinder 13 ist entlastet. Die Pressplatte 5 befindet sich damit noch nahe beim Boden 3 der Pressform 1. Die Presskraft wird vollständig vom äusseren Hubzylinder 15 erzeugt. Durch das gemeinsame Vortreiben von Pressform 1 resp. Siebwickel 10 und Pressplatte 5 wird de facto die Gegenplatte 8 von oben (falls die Vorrichtung aufrecht steht) in das Sirten-Käse-Bruchgemisch hineingepresst.

Fig. 2d zeigt im Gegensatz zu Fig. 2b den Arbeitszustand "Presskraft von unten". Der äussere Hubzylinder 15 ist entlastet. Die Pressform 1 befindet sich damit nahe bei der Tragkonstruktion 18. Die Pressform 1 ragt infolgedessen mit ihrem oberen Ende nicht über das Gegenkreuz 7 (vgl. Fig. 1) hinaus. Unter Druck befindet sich nur der innere Zylinder 13. Die Pressplatte 5 ist damit bezüglich der Pressform 1 gegen die Gegenplatte 8 hin vorgetrieben.

Fig. 2c veranschaulicht schliesslich den Arbeitszustand "Presskräfte von oben und von unten". Es sind beide Hubzylinder 13 und 15 unter Druck. Einerseits ist die Pressform 1 bezüglich der Tragkonstruktion 18 und andererseits die Pressplatte 5 bezüglich der Pressform 1 vorgetrieben. Dies resultiert in einer Presskraft, die sowohl von oben als auch von unten wirkt.

Aus den Erläuterungen zu Fig. 2 a-d ergibt sich, dass eine Kraft von oben resp. von unten dann vorliegt, wenn sich die Pressform relativ zur obenliegenden Gegenplatte resp. die Pressplatte relativ zur Pressform verschiebt.

Die hier gebrauchte Terminologie orientiert sich an der Vertikalen im Raum (die durch die Gravitationskraft vorgegeben ist). Mit anderen Worten, bei der Erläuterung der Arbeitsstellungen anhand der Fig. 2 a-d ist davon ausgegangen worden, dass die Achse der zylindrischen Pressform 1 vertikal im Raum steht und dass das Gegenkreuz 7 (vgl. Fig. 1) in diesem Sinn oben und die Tragkonstruktion 18 unten ist. Falls die ganze Pressvorrichtung gewendet wird (durch Rotation um eine horizontale Achse), so dass die Tragkonstruktion 18 oben und das Gegenkreuz 7 unten ist, dann vertauschen sich die Begriffe "oben" und "unten" in bezug auf die in Fig. 2 gezeigten Arbeitsstellungen.

Wird also z. B. die in Fig. 2d gezeigte Arbeitsstellung um eine horizontale Achse um 180° gewendet, dann wirkt nicht mehr eine Kraft von unten, sondern eine von oben.

Der Kern der Erfindung liegt in der Erkenntnis, dass es nicht gleichgültig ist, ob eine bestimmte Kraft von oben oder von unten auf das Sirten-Käse-Bruchgemisch angewendet wird. Erstaunlicherweise ist der Pressvorgang diesbezüglich nicht symmetrisch. In der Tat können die beim Stand der Technik vorhandenen Nachteile (Inhomogenität des gepressten Käses) nicht dadurch vermieden werden, dass der Siebwickel - gemäss der in der CH-Patentschrift 670 929 beschriebenen Lehre - zunächst stillsteht und danach noch mitgenommen wird, so dass zunächst eine Kraft von unten und dann eine solche von oben ausgeübt wird.

Im Rahmen der vorliegenden Erfindung wurde erkannt, dass der Anfangsphase des Pressvorgangs eine zentrale Bedeutung zukommt. Dies hängt damit zusammen, dass das Sirten-Käse-Bruchgemisch nicht den Gesetzen eines flüssigen Mediums gehorcht, sondern aufgrund auftretender innerer Reibung weitaus komplexer reagiert. Aus diesem Grund muss vor allem die Relativbewegung zwischen dem Randbereich des Sirten-Käse-Bruchgemisches und dem Siebwickel beachtet werden. Wichtig ist dabei die Erkenntnis, dass die Relativbewegung zu Beginn des Pressvorgangs besonders gross ist und dass sie in diesem Verfahrensstadium minimiert werden sollte. Dies soll nachfolgend im Zusammenhang mit dem erfindungsgemässen Verfahren näher erläutert werden.

Um mit der erfindungsgemässen Vorrichtung einen Käselaib mit gegenüber dem Stand der Technik beträchtlich erhöhter Homogenität zu erhalten, kann z. B. folgendes Verfahren angewendet werden:

Zunächst sind die Hubzylinder in die entlastete Stellung (vgl. Fig. 2a) zu bringen. Gegenkreuz 7, Gegenplatte 8 und Siebrondelle 9 werden, falls nicht schon erfolgt, entfernt. Gegenplatte 5 und Siebrondelle 6 sind dagegen in der in Fig. 1 gezeigten Anordnung eingelegt. Dasselbe gilt für den Siebwickel 10.

Nun kann eine vorgegebene Menge des Sirten-Käse-Bruchgemisches in die Pressform 1 abgefüllt werden. Die eingefüllte Masse wird, da sie nicht wirklich flüssig ist, einen kleinen Hügel bilden. Der Hügel wird in der Regel nur schwach überhöht sein und nicht aus der Pressform 1 herausragen. Ueber einen nicht eingezeichneten Ablasshahn kann überflüssige Sirte abgelassen werden. Nun werden die Siebrondelle 9 (und gegebenenfalls einlegbare Zeichen zur Kennzeichnung des Käses in bekannter Weise) auf die Masse und die Gegenplatte 8 eingelegt. Schliesslich wird das Gegenkreuz 7 mit den Befestigungsarmen 19.1, 19.2 an den Verankerungsstützen fixiert.

Dann kann der Pressvorgang beginnen. Gemäss der Erfindung wird dabei zumindest in der Anfangsphase eine Kraft von oben zur Wirkung gebracht. Zu diesem Zweck wird der äussere Hubzylinder 15 unter Druck gesetzt. Pressform und Pressplatte werden gleichzeitig und in gleichem Mass nach oben vorgetrieben (vgl. Fig. 2b). Bei diesem sog. Anpressen wird der grösste Teil der Flüssigkeit (Sirte) abgepresst. Entsprechend findet in diesem Stadium die grösste Volumenkompression statt. Die Volumenkompression bringt eine Relativbewegung zwischen Siebwickel 10 und Gegenplatte 8 mit sich. Der oberste Teil des Siebwickels wird dabei an der Gegenplatte 8 vorbeigeschoben. Das Problem liegt nun darin, dass das Sirten-Käse-Bruchgemisch am Siebwickel 10 haftet und durch die Gegenplatte 8 vom Siebwickel 10 gleichsam abgestreift werden muss. Aufgrund der inneren Reibung des Sirten-Käse-Bruchgemischs nimmt die Randzone des Gemischs einen höheren Druck auf als der Bereich in der Mitte des Volumens. Der Randbereich wird deshalb stärker entwässert.

Wie bereits erwähnt, bildet das Sirten-Käse-Bruchgemisch unmittelbar nach dem Einfüllen einen kleinen Hügel, d. h. eine bombierte Oberfläche. Zu Beginn des Anpressvorgangs wird deshalb zunächst eine gleichmässige Verteilung des Gemischs bewirkt, bevor das Gemisch selbst überhaupt einen namhaften Druck aufnehmen kann. Dadurch dass die Presskraft von oben wirkt, ist in der Anfangsphase noch keine Relativbewegung zwischen dem Gemisch und dem Siebwickel 10 erforderlich. Infolgedessen kann in diesem Anfangsstadium auch keine erhöhte Kompression des Randbereichs stattfinden.

Anders verhält es sich, wenn Kraft von unten ausgeübt wird. Dann wird nämlich, da der Siebwickel 10 feststeht und die Gegenplatte 5 sich relativ zu diesem bewegt, auch in der Anfangsphase eine Relativbewegung zwischen dem Randbereich des Sirten-Käse-Bruchgemischs und dem Siebwickel 10 herbeigeführt. Wie bereits erwähnt, führt dies aufgrund der Haftreibung resp. inneren Reibung vorzeitig zu einer Druckaufnahme am Rand.

Der Siebwickel 10 liegt, wie bereits erwähnt, lose an der Innenseite der Pressform 1. Ob und gegebenenfalls wie er sich verschiebt, wenn z. B. der Hubkolben 13 betätigt und damit die Gegenplatte 5 vorgeschoben wird, hängt von den auftretenden Reibungskräften ab. Beim Pressen wird das Sirten-Käse-Bruchgemisch radial nach aussen gegen den Siebwickel 10 gedrückt. Wenn die Haftreibung zwischen dem Bruchgemisch und dem Siebwickel 10 grösser ist als diejenige zwischen dem Siebwickel 10 und der Innenseite der Pressform 1, dann wird der Siebwickel 10 beim Pressen mitgenommen. In welchem Mass dies stattfindet, hängt davon ab, wie gross die auftretenden Relativbewegungen und Haftreibungen entlang der axialen Richtung sind. Generell kann nicht vorausgesagt werden, wie sich der Siebwickel 10 verschiebt. Er wird (im wahrsten Sinne des Wortes) dem Weg des geringsten Widerstandes folgen.

Nach dem Anpressen kann wahlweise Kraft von oben oder von unten angewendet werden. Sie kann dabei je nach Bedarf auch zyklisch variiert werden. Innerhalb einer z. B. 20-stündigen Behandlung wird die Vorrichtung auch mehrfach gewendet, um die Homogenität des gepressten Sirten-Käse-Bruchgemischs zu verbessern.

Nach Abschluss des Pressvorgangs werden die Hubzylinder 13 und 15 entlastet, das Gegenkreuz 7 gelöst und die Gegenplatte 8 sowie die Siebrondelle 9 herausgenommen. Durch Betätigen des Hubzylinders 13 kann der Käselaib nach oben aus der Pressform 1 herausgeschoben werden.

Eine Presskraft von oben zu Beginn des Abpressvorgangs könnte im Prinzip auch dadurch zur Wirkung gebracht werden, dass unmittelbar nach dem Einfüllen des Sirten-Käse-Bruchgemischs 11 die Vorrichtung um die horizontale Achse um 180° gewendet wird und dann nur der innere Hubzylinder 13 betätigt wird, so dass die Pressplatte 5 von oben in den durch den Siebwickel 10 und die Gegenplatte 8 gebildeten zylindrischen Topf hineingepresst wird. Allerdings ändert sich beim Wenden die Verteilung des Gemischs im Inneren des Pressraums und insbesondere am Siebwickel, falls nicht vorgängig ein minimales Anpressen erfolgt ist.

Eine Untersuchung der Mikrostruktur eines von unten gepressten Käses zeigt, dass am Rand das Korn in einer Richtung stark gepresst ist. Es ist daher langgezogen und dünn. Im Zentrum dagegen ist die Mikrostruktur ziemlich regelmässig.

Durch die Erfindung wird nun der Unterschied in der Mikrostruktur vom Rand zum Zentrum beträchtlich reduziert, wenn auch nicht ganz eliminiert (eine Relativbewegung ist nicht über den gesamten Rand hinweg vollständig zu vermeiden).

Das Verfahren ist nicht nur mit der oben beschriebenen Vorrichtung auszuführen und ebensowenig ist die Vorrichtung auf die Durchführung des Verfahrens beschränkt. Zwar mag das oben beschriebene Pressverfahren sehr vorteilhaft sein. Aber trotzdem kann es Gründe geben, den Käse nach altbekannter Art zu pressen. Die erfindungsgemässe Vorrichtung lässt ohne weiteres beide Verfahrensarten zu. Ihr grosser Vorteil liegt darin, dass ohne Aenderung der Vorrichtung die verschiedensten Verfahren implementiert werden können. Es ist von daher besonders vorteilhaft, die Pressvorrichtung mit einer speicherprogrammierbaren Schaltung anzusteuern. Je nach den Bedürfnissen des Anwenders werden dabei einige ausgewählte Pressverfahren vorprogrammiert.

Die erfindungsgemässe Vorrichtung kann in verschiedensten Weisen abgewandelt werden. So können z. B. die Hubzylinder statt pneumatisch auch hydraulisch betätigbar sein. Sie brauchen auch nicht ineinander verschachtelt angeordnet zu sein. Die Pressform kann z. B. auch durch zwei am Rand angreifende Hubzylinder verschoben werden.

Vielfach wird es als unabdingbar angesehen, dass die Pressvorrichtung drehbar gelagert ist, um ein Wenden des Käses während des Pressens zu ermöglichen. Es leuchtet ein, dass sich die Erfindung aber nicht auf wendbare Einrichtungen beschränkt. Entsprechend kann die Tragkonstruktion auch einfacher ausgebildet sein.

Zusammenfassend kann festgehalten werden, dass durch die Erfindung eine vielseitig einsetzbare Vorrichtung und ein besonders vorteilhaftes Verfahren zum Herstellen von homogen gepressten Käselaiben geschaffen worden sind.

## Patentansprüche

1. Verfahren zum Herstellen eines Käselaibs aus einem Sirten-Käse-Bruchgemisch, bei welchem das Sirten-Käse-Bruchgemisch in einer mit einem Siebwickel (10) ausgekleideten Pressform (1) zwischen Pressplatte (5) und Gegenplatte (8) gepresst wird, dadurch gekennzeichnet, dass zumindest zum Anpressen eine Presskraft von oben zur Wirkung gebracht wird, indem die Pressform (1) zusammen mit der Pressplatte (5) gleichzeitig und in gleichem Mass nach oben auf die Gegenplatte zu bewegt wird.

2. Vorrichtung, zur Durchführung des Verfahrens nach Anspruch 1, mit einer Pressplatte (5) und einer Gegenplatte (8), wobei die Pressplatte (5) in einer mit einem Siebwickel (10) ausgekleideten Pressform (1) durch eine Antriebseinrichtung (12, 13) vorschiebbar ist, dadurch gekennzeichnet, dass die Pressform mittels einer steuerbaren Antriebseinrichtung (15, 16) entsprechend einer vorgebbaren Relativbewegung bezüglich der Press- resp. Gegenplatte (5, 8) verschiebbar ist.

3. Vorrichtung nach Anspruch 2, dadurch gekennzeichnet, dass die steuerbare Antriebseinrichtung (15, 16) einen separaten pneumatischen oder hydraulischen Hubzylinder (15) umfasst.

4. Vorrichtung nach Anspruch 3, dadurch gekennzeichnet, dass der Hubzylinder (15) zum Verschieben der Pressform (1) in koaxialer Verschachtelung mit einem Hubzylinder (13) zum Vorschieben der Pressplatte (5) angeordnet ist.

5. Vorrichtung nach Anspruch 4, dadurch gekennzeichnet, dass die Hubzylinder (13, 15) so ineinander verschachtelt und mit der Pressform (1) resp. der Pressplatte (5) verbunden sind, dass beim Betätigen des die Pressform (1) vortreibenden Hubzylinders (15) gleichzeitig und in gleichem Mass die Pressplatte (5) vorgetrieben wird und beim Betätigen des zweiten Hubzylinders (13) die Pressplatte (5) gegenüber der Pressform vorgetrieben wird.

6. Vorrichtung nach einem der Ansprüche 2 bis 5, dadurch gekennzeichnet, dass die Pressform (1) zylindrisch und die Press- und Gegenplatte (5, 8) rund sind.

7. Vorrichtung nach einem der Ansprüche 2 bis 6, dadurch gekennzeichnet, dass die Antriebsvorrichtung (15, 16) eine Steuerschaltung zur Steuerung der Hubzylinder (13, 15) umfasst, so dass wahlweise eine Presskraft von unten, eine Presskraft von oben oder Presskräfte von unten und oben auf das zu pressende Sirten-Käse-Bruchgemisch ausgeübt werden kann resp. können.

8. Anlage, gekennzeichnet durch mehrere, auf einer gemeinsamen Tragkonstruktion (18) angebrachte Vorrichtungen nach einem der Ansprüche 2 bis 7, wobei die Tragkonstruktion (18) um eine horizontale Achse drehbar gelagert ist zum Wenden der Käse während des Pressens.

9. Anlage nach Anspruch 8, dadurch gekennzeichnet, dass die Gegenplatten (8) mit je einem an der Tragkonstruktion (18) befestigten Gegenkreuz abstützbar sind.

## Claims

1. A method for producing a whole cheese from a curds and whey mixture, in which the curds and whey mixture is pressed in a pressing mould (1) lined with a strainer (10) between a press plate (5) and a counter-plate (8), characterised in that at least to exert a surface pressure, a pressing force is exerted from above, by the pressing mould (1), the press plate (5) being moved upwards at the same time and to the same extent towards the counter-plate.

2. Apparatus for implementing the method according to claim 1, comprising a press plate (5) and a counter-plate (8), wherein the press plate (5) may be advanced in a pressing mould (1) lined with a strainer (10) by means of a driving mechanism (12, 13), characterised in that the pressing mould is displaceable by means of a controllable driving mechanism (15, 16) corresponding to a predeterminable relative movement with respect to the press plate or counter-plate (5, 8).

3. Apparatus according to claim 2, characterised in that the controllable driving mechanism (15, 16) comprises a separate pneumatic or hydraulic lifting cylinder (15).

4. Apparatus according to claim 3, characterised in that the lifting cylinder (15) for displacing the pressing mould (1) is located in an axially interlocking arrangement with a lifting cylinder (13) for advancing the press plate (5).

5. Apparatus according to claim 4, characterised in that the lifting cylinders (13, 15) are interlocked one inside the other and are connected to the pressing mould (1) and the press plate (5) respectively in such a way that when the lifting cylinder (15) advancing the pressing mould (1) is operated, the press plate (5) is advanced at the same time and to the same extent, and when the second lifting cylinder (13) is operated, the press plate (5) is advanced relative to the pressing mould.

6. Apparatus according to one of claims 2 to 5, characterised in that the pressing mould (1) is cylindrical and the press- and counter-plates (5, 8) are circular.

7. Apparatus according to one of claims 2 to 6, characterised in that the driving mechanism (15, 16) comprises a control circuit for controlling the lifting cylinders (13, 15), so that, optionally, a pressing force from underneath, a pressing force from above or pressing forces from underneath and above may be exerted on the curds and whey mixture which is to be pressed.

8. An installation characterised by a plurality of apparatus according to one of claims 2 to 7 fitted on a common supporting structure (18) the supporting structure (18) being mounted for rotation around a horizontal axis for turning the cheese during the pressing process.

9. An installation according to claim 8, characterised in that the counter-plates (8) are supported with respective cross bearers fixed to the supporting structure (18).

## Revendications

1. Procédé pour la fabrication d'un bloc de fromage à partir d'un mélange fractionné fromage-Sirten, dans lequel le mélange fractionné fromage-Sirten est compressé dans un moule (1) revêtu d'un enroulement de tamisage (10) entre une plaque de compression (5) et une contre-plaque (8), caractérisé en ce qu'au moins pour la compression, on applique une force de compression en partant du haut, tout en déplaçant simultanément le moule (1) avec la plaque de compression (5) et dans une même proportion vers le haut en direction de la contre-plaque.

2. Dispositif pour la réalisation du procédé selon la revendication 1, avec une plaque de compression (5) et une contre-plaque (8), la plaque de compression (5) étant déplaçable dans un moule (1) revêtu d'un enroulement de tamisage (10) par l'intermédiaire d'un dispositif d'entraînement (12, 13), caractérisé en ce que le moule est déplaçable au moyen d'un dispositif d'entraînement commandable (15, 16) selon un mouvement relatif prédéfinissable par rapport à la plaque de compression ou à la contre-plaque (5, 8).

3. Dispositif selon la revendication 2, caractérisé en ce que le dispositif d'entraînement commandable (15, 16) comporte un vérin de levage séparé pneumatique ou hydraulique (15).

4. Dispositif selon la revendication 3, caractérisé en ce que le vérin de levage (15) est disposé de façon à déplacer le moule (1) en emboîtement coaxial avec un vérin de levage (13) pour le déplacement de la plaque de compression (5).

5. Dispositif selon la revendication 4, caractérisé en ce que les vérins de levage (13, 15) s'emboîtent l'un dans l'autre et sont raccordés avec le moule (1) ou avec la plaque de compression (5) de sorte que lors de l'actionnement du vérin de levage (15) poussant le moule (1), la plaque de compression (5) est poussée simultanément et dans une même proportion et lors de l'actionnement du second vérin de levage (13), la plaque de compression (5) est poussée sur l'avant par rapport au moule.

6. Dispositif selon l'une des revendications 2 à 5, caractérisé en ce que le moule (1) est cylindrique et la plaque de compression et la contre-plaque (5, 8) sont rondes.

7. Dispositif selon l'une des revendications 2 à 6, caractérisé en ce que le dispositif d'entraînement (15, 16) comporte une commutation de commande destinée à commander le vérin de levage (13, 15) de façon à exercer ou à pouvoir exercer sélectivement une force de compression par le bas, une force de compression par le haut ou des forces de compression par le bas et par le haut sur le mélange fractionné fromage-Sirten qu'il s'agit de comprimer.

8. Installation, caractérisée par plusieurs dispositifs agencés sur une structure de support commune (18) selon l'une des revendications 2 à 7, la structure porteuse (18) étant montée de façon rotative sur un axe horizontal pour la rotation du fromage pendant la compression.

9. Installation selon la revendication 8, caractérisée en ce que les contre-plaques (8) peuvent s'appuyer avec respectivement un croisillon fixé sur la structure porteuse (18).
